# EUROPÄISCHE PATENTSCHRIFT

(11) **EP 0 637 653 B1**
(45) Veröffentlichungstag und Bekanntmachung des Hinweises auf die Patenterteilung: **24.09.1997**
(21) Anmeldenummer: 94111271.6
(22) Anmeldetag: 20.07.1994
(51) Int. Cl.: E03F 5/14, B01D 21/00

(54) **Anordnung zum Ausscheiden von Schmutzstoffen, insbesondere Grobstoffen, bei Trennbauwerken für den Gewässerschutz, wie z. B. Regenwasserentlastungsbauwerken**
Device for separating, in particular coarse contaminants in separation plants for water protection
Dispositif de ségrégation de débris, en particulier grossiers, dans les installations de séparation pour la protection des eaux, par exemple installations d'évacuation d'eaux pluviales

(30) Priorität: 28.07.1993 DE 4325278; 23.10.1993 DE 4336228
(43) Veröffentlichungstag der Anmeldung: 08.02.1995
(73) Patentinhaber: VSB VOGELSBERGER Umwelttechnischer Anlagenbau GmbH, D-36369 Lautertal-Eichenrod (DE)
(72) Erfinder:
(74) Vertreter: Zahn, Roland, Dipl.-Ing.

(56) Entgegenhaltungen:
- CH-A- 681 358
- FR-A- 1 362 158
- GB-A- 487 803

## Beschreibung

Die vorliegende Erfindung bezieht sich auf eine Anordnung zum Ausscheiden von Grobstoffen und/oder sperrigen Gütern in Regenwasserentlastungsbauwerken nach dem Oberbegriff des Patentanspruchs 1, sowie auf ein Regenbecken für Abwasseranlagen mit einem Überlauf für geklärtes Wasser nach dem Oberbegriff des Patentanspruchs 8.

Die bestimmungsgemäße Aufgabe von Regenbecken und Regenwasserentlastungsbauwerken wie Regenrückhaltebecken. Regenüberlautbecken, Kanalstauräumen und Regenüberläufen besteht darin, bei Regenereignissen den Zufluß in ein Gewässer (Vorfluter) zu dämpfen und die darin und darauf schwimmenden Schmutzstoffe möglichst weitgehend zurückzuhalten. Die Schmutzstoffe werden dann zu einer (Nach-) Behandlungsanlage, insbesondere dem Klänwerk zugeführt. (Daß in diesem Anwendungsfall das Klärwerk vor einer hydraulischen Überlastung geschützt wird, sei am Rande erwähnt.)

Eine gattungsgemäße Anordnung zum Ausscheiden von Grobstoffen und/oder sperrigen Gütern in einem Regenwasserentlastungsbauwerk, bestehend aus einem im Bereich der Entlastungsschwelle angeordneten Schmutzabscheider, wobei der Schmutzabscheider an der Überströmseite der Entlastungsschwelle angeordnet ist, und dort ferner ein separater Schmutzkanal vorgesehen ist, der die vom Schmutabscheider zurückgehaltenen Grobstoffe aufnimmt, ist aus der CH - A - 68 13 58 bekannt.

Darüberhinaus beschreibt die GB - A - 48 78 03 ein Regenbecken für Abwasseranlagen mit einem Überlauf für geklärtes Wasser, wobei der Überlauf durch einen am Beckenrand angeordneten Klarwasserabzug mit einem Überlaufwehr und einer Klarwasserleitung gebildet ist, und wobei am Übergang vom Becken zum Klarwasserabzug ein Schmutzabscheider zuni Zurückhalten von Schmutzstoffen vorgesehen ist, und wobei ferner der Klarwasserabzug aus einem mittels des Schmutzabscheiders abgedeckten, funktional mit der Klarwasserleitung verbundenen Gerinne und einem, die vom Schmutzabscheider zurückgehaltenen Schmutzstoffe bzw. Grobstoffe abführenden Schmutzauslauf zusammengesetzt ist, wobei auch das Gerinne und der Schmutzauslauf durch eine Trennwand - hier die Beckenaußenwand selbst - gegeneinander separiert sind.

Die vorliegende Erfindung bezieht sich letztlich ganz allgemein auf eine Grobstoffabscheidung für jegliche Art und jegliches Anwendungsgebiet von Trennbauwerken für den Gewässerschutz, d.h. für die Regenkanalisation genauso wie für die Mischkanalisation, aber auch für alle denkbaren beliebigen Aggregationen und Kombinationen von Bauwerken. Dabei spielt die Frage der Form dieser Bauwerke genausowenig eine Rolle, wie die Frage, ob das Bauwerk innerhalb eines Kanalnetzes, in Verbindung mit einer Regenentlastung oder als Regenbecken mit einem Klärüberlauf oder einem Beckenüberlauf zum Einsatz kommt. Grundsätzlich geht es dabei einfach darum, einen Stoffstrom in zwei Teilströme zu separieren, wovon der eine Teilstrom einem auf einen vorgegebenen Grenzwert eingestellten Abfluß entspricht und der zweite Teilstrom dem darüber hinaus liegendem Überschuß entspricht, der separiert wird bzw. werden muß (um spezifisch nachbehandelt zu werden

Die bekannten Siebanlagen haben sich von Funktionsprinzip her bewährt.

Die der vorliegenden Erfindung zugrunde liegende Aufgabe besteht allgemein darin eine Anordnung der gattungsgemäßen Art anzugeben, bei der die Separation der Grobstoffe und/oder sperrigen Güter konzeptionell vereinfacht ist.

Die der vorliegenden Erfindung zugrundeliegende Aufgabe wird durch die Anspruch 1 angegebenen Merkmale gelöst; in Verbindung mit dem Regenbecken nach Anspruch 8 wird die Aufgabe durch die hier angegebenen Merkmale gelöst.

Mit anderen als im Patentanspruch 1 gebrauchten Worten besteht der Kern der vorliegenden Erfindung darin, das sogenannte Überschußwasser erst nach dem Überströmen der Entlastungsschwelle zu sieben und die ausgeschiedene Schmutzfracht in einen tiefer liegenden separaten Schmutzwasserkanal abrutschen zu lassen und zu entsorgen. In Hinblick auf die Anwendung bei einem Regenbecken nach Anspruch 9 besteht der Kern der vorliegenden Erfindung darin, das über den Überlauf in den Klarwasserabzug überströmende Wasser ungehindert einströmen zu lassen und die gegebenenfalls mitgeführten Grobstoffe quasi vor dem Abfluß über die Klarwasserleitung zu filtern. Damit ist letztlich sichergestellt, daß sämtliche im Überschußwasser aufgeschwemmten Grob- und Schmutzstoffe aus dem Regenbecken abfließen und separat ausgetragen werden können. Insoweit ist das erfindungsgemäße Regenbecken als mechanisches Klärwerk für Grobstoffe zu betrachten.

Besondere Ausgestaltungen, Weiterbildungen und Zuordnungen sind Gegenstand der Unteransprüche. Dabei werden insbesondere die die Stabelemente und die Ausgestaltung des Schmutzwasserkanals und dessen Spülung betreffenden Merkmale spezifiziert. Darüber hinaus werden auch spezifische, sich auf runde Regenwasserentlastungsbauwerke beziehende Details genannt, wobei jedoch explizit nochmals darauf hingewiesen wird, daß das Prinzip der Erfindung ganz allgemein auch auf gerade und andersgeformte Überläufe anwendbar ist.

Die Einzelheiten der Erfindung werden im folgenden anhand der Zeichnung näher erläutert. Diese zeigt als Ausführungsbeispiel in
- Fig. 1: einen als Regenwasserentlastungsbauwerk dienenden, als Rundbecken ausgebildeten Regenüberlauf im Grundriß;
- Fig. 2: eine Querschnittsdarstellung des Regenüberlaufs nach Fig. 1 längs der Schnittlinie A-A;
- Fig. 3: eine Querschnittsdarstellung des Regenüberlaufs nach Fig. 1 längs der Schnittlinie B-B;
- Fig. 4: eine Prinzipdarstellung der Schmutzabscheidung in Verbindung mit einem Kanalstauraum;
- Fig. 5: die Darstellung nach Fig. 4 im Querschnitt.
- Fig. 6: einen Axialschnitt durch ein Regenbecken, und in
- Fig. 7: eine Aufsicht auf das Regenbecken nach Fig. 6.

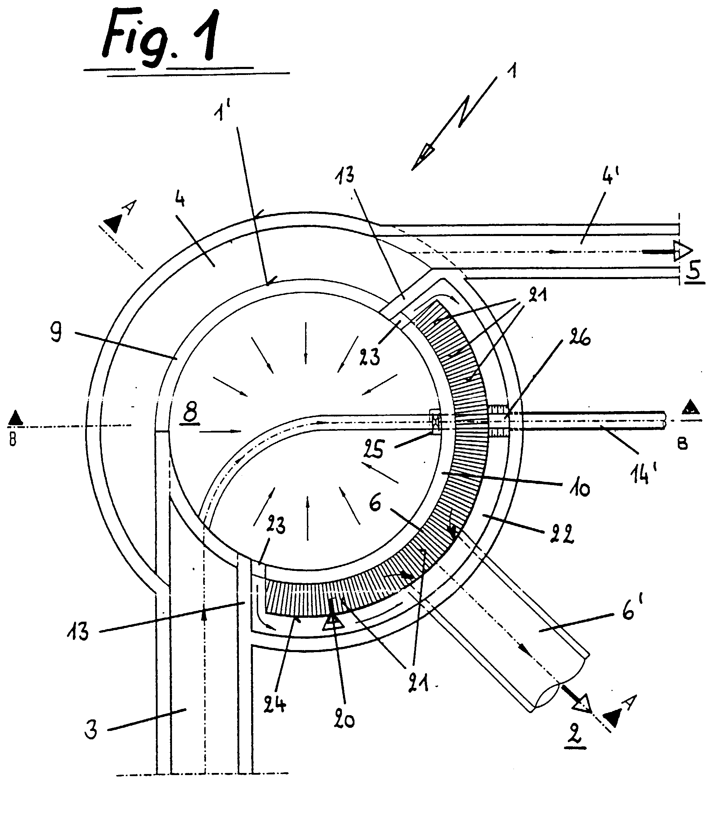

Die Fig. 1, 2 und 3 zeigen einen Regenüberlauf 1, dessen Grundfunktion darin besteht, bei Abflüssen, die aufgrund eines Regenereignisses größer einem kritischen Mischwasserabfluß sind, eine Entlastung zu einem Gewässer (Vorfluter) 2, d.h. zu einem See und/oder einem fließenden Gewässer hin zu ermöglichen. Regenüberläufe begrenzen so das zu einer Behandlungsanlage , wie z.B. einem Klärwerk 5 weiterzuführende Mischwasser auf einen kritischen Mischwasserabfluß; das darüberhinaus gehende Mischwasser (Überschußwasser) 2 wird in den Vorfluter entlastet. Der Regenüberlauf 1 dient somit nicht als Speichervolumen, sondern nur als Trennbauwerk zwischen einem Zufluß zum Klärwerk 5 einerseits und zum Vorfluter 2 andererseits.

Der Regenüberlauf 1 gemäß den Fig. 1, 2 und 3 besteht aus einem kreisförmigen inneren Rundbauwerk 1' mit einem z.B. von der Kanalisation her kommenden Zufluß 3 für das Mischwasser, einem etwa tangential abgehenden Gerinne 4 mit einem Ablauf 4' zum weiterführenden Kanalnetz, d.h. letztlich zum angeschlossenen Klärwerk 5 oder einem vor letzterem angeordneten Regenüberlaufbecken, und einem Gerinne 6 mit einem Abfluß 6' zum Vorfluter 2.

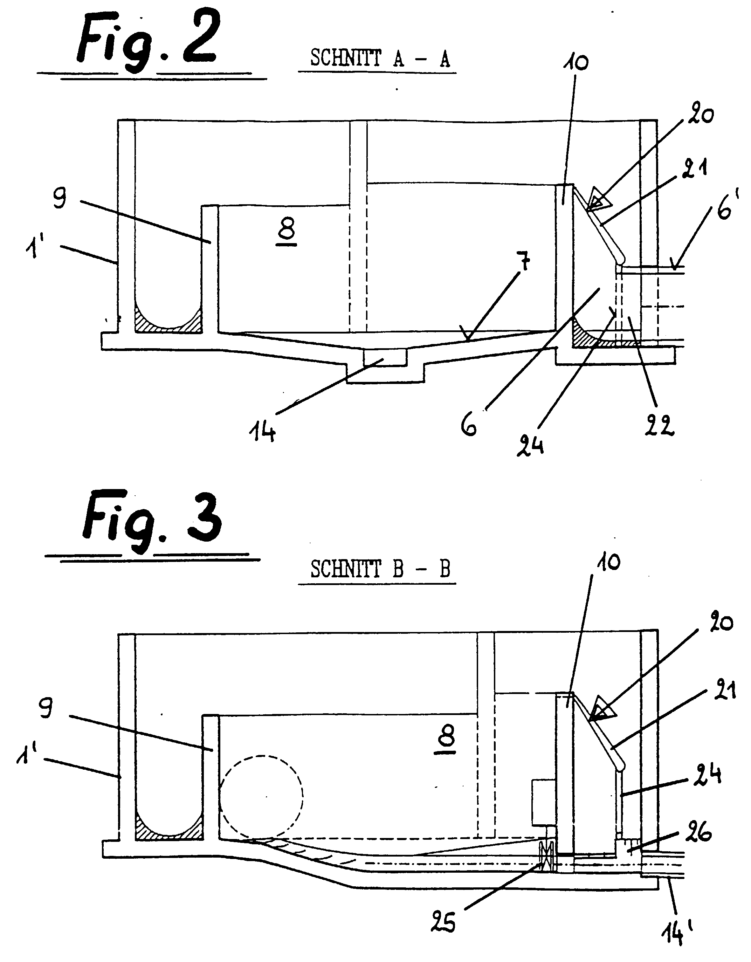

Das Rundbauwerk 1' weist einen zur Mitte hin geneigten Boden 7 auf (vgl. Fig. 2) und bildet einen an den Mischwasserzulauf 3 etwa tangential anschließenden Fangraum 8, der zu dem zum Klärwerk 5 führenden Gerinne 4 hin durch eine erste (Überlauf-) Schwelle 9 separiert ist. Der Fangraum 8 ist darüberhinaus gegenüber dem Gerinne 6 zum Vorfluter 2 hin durch eine (zweite) Entlastungsschwelle 10 separiert, deren Krone höher liegt als die der ersten Schwelle 9. Funktional und konstruktiv betrachtet ist noch anzumerken, daß die von der (Überlauf-) Schwelle 9 bzw. der Entlastungsschwelle 10 begrenzten Sektoren des als Fangraum 8 dienenden kreisförmigen Rundbauwerks 1' jeweils relativ zueinander über Schottenwände 13 separiert sind, die höher sind, als der maximale Wasserstand im Rundbauwerk 1', welcher sich bei maximalem Mischwasserzufluß einstellt. Der Regenüberlauf 1 weist ferner im Bereich der infolge des geneigten Bodens 7 abgesenkten Fangraummitte einen Bodenabzug 14 auf, der seinerseits über eine Bodenabzugleitung 14 zum Klärwerk 5 führt. Der Ablauf 4' zum Kanalnetz und die Bodenabzugleitung 14' sind vor ihrem Zulauf zum Klärwerk 5 in der Regel in einem Drosselschacht zusammengeführt, der gegebenenfalls einen Vorschacht aufweist.

Die Funktion des Regenüberlauf 1 gemäß der Zeichnung ist wie folgt:

Im Trockenwetter-Fall gelangt das aus der Kanalisation über den Zulauf 3 zufließende Mischwasser etwa tangential in den Fangraum 8 und wird hier der Kreisform des Fangraum 8 entsprechend spiralförmig zum tieferliegenden Bodenabzug 14 hin gelenkt. Von hier gelangt das Abwasser über die Bodenabzugleitung 14' zum Klärwerk 5.

Bei einem Regenereignis soll die zum Klärwerk 5 abfließende Mischwassermenge auf einen vorgegebenen Sollwert begrenzt werden. Da die Abflußleistung der Bodenabzugsleitung 14' nicht ausreicht - ( sie ist nur für den Trockenwetter-Fall dimensioniert und demzufolge kleiner als es dem Sollwert entspricht) - staut sich das Mischwasser im Fangraum 8 auf und erreicht die Höhe der ersten Schwelle 9. Hierbei stellt sich im Fangraum 8 eine deutliche Rotationsströmung des Mischwassers ein. Das weiterhin zufließende Mischwasser wird nun über diese erste (Überlauf-) Schwelle 9 abgeschlagen und gelangt über das Gerinne 4 bzw. den Ablauf 4' zum Klärwerk 5 oder zu einem Regenüberlaufbecken, wobei der vorgegebene Sollabflußwert durch eine Abflußdrosselung (z.B. im nachgeschalteten Drosselschacht) eingehalten bzw. nicht überschritten wird.

Wenn der Mischwasserzufluß größer ist als der vorgenannte Sollabfluß und das Wasser im Fangraum 8 und damit auch im Gerinne 4 weiter ansteigt und einen der Krone der Entlastungsschwelle 10 entsprechenden Pegel erreicht bzw. übersteigt, gelangt das überfließende Mischwasser (Überschußwasser) schließlich über das Gerinne 6 und den Ablauf 6' direkt in den Vorfluter 2. Dabei muß sichergestellt werden, daß dieses in den Vorfluter 2 abgeschlagene Wasser frei von Grob- und Schwimmstoffen, d.h. von Schmutzstoffen und sperrigen Gütern, ist.

Die im Fangraum 8 aufgeschwommenen Schwimmstoffe werden mit dem Überlaufwasser über die Schwelle 9 in das Gerinne 4 ausgetragen und gelangen von dort über den Ablauf 4 (oder ggf. über eine zweite separate Schwimmstoff-Ablaufleitung) zum genannten Drosselschacht bzw. zum Klärwerk 5. Sinkt nach dem Ende eines Regenereignisses der Wasserpegel wieder ab, so wird das "Restwasser" infolge seiner Rotationsströmung im Fangraum 8 diesen reinigen.

Das insoweit konstruktiv und funktional beschriebene Regenwasserentlastungsbauwerk ist Stand der Technik.

Gegenstand der vorliegenden Erfindung ist eine Konfiguration bzw. Konzeption, mit der - im Hinblick auf das spezielle Ausführungsbeispiel - ohne Beeinträchtigung der Rotationsströmung eine optimale Ausscheidung bzw. Separation der Grobstoffe aus dem zum Vorfluter 2 hin fließenden Überschußwasser gewährleistet ist. Die Grundlage dieser Konfiguration bildet ein radial an die Entlastungsschwelle 10 anschließender Schmutzabscheider 20, der die Grobstoffe einerseits daran hindert ins vorfluterseitige Gerinne 6 zu gelangen und andererseits dafür sorgt, daß diese Grobstoffe in einen Ablauf gelangen, über den sie dem nachgeschalteten Klärwerk 5 zugeführt werden.

Gemäß dem in den Fig. 1, 2 und 3 dargestellten Rundbauwerk 1' besteht der Schmutzabscheider 20 aus einer Vielzahl äquidistant zueinander angeordneter, radial nach außen sich relativ zueinander konisch aufspreizender Stabelemente 21. (Bei einem geraden Überlauf wären die Stabelemente naturgemäß parallel angeordnet.) Diese Anordnung von Stabelementen 21 bildet letztlich ein Stabgitter, das einerseits das Überschußwasser durchläßt und andererseits alle Grobstoffe, die größer sind, als es dem Stababstand entspricht, zurückhält.

Das aus den Stabelementen 21 gebildete Stabgitter deckt das vorfluterseitige Gerinne 6 ab. Koaxial zur Achse des Rundbauwerks 1' schließt an das vorfluterseitige Gerinne 6 ein Schmutzkanal 22 an, der die von den Stabelementen 21 zurückgehaltenen Grobstoffe aufnimmt und zu einem Ablauf transportiert. Dieser Ablauf ist dem dargestellten Ausführungsbeispiel entsprechend dadurch realisiert, daß vom Schmutzkanal 22 eine offene Verbindung (vgl. Bezugszeichen 26) zur Bodenabzugleitung 14' besteht, so daß die Grobstoffe unmittelbar mit den über den Bodenabzug 14 abgezogenen Grobstoffen zum Klärwerk 5 geführt werden. Wie in der Zeichnung dargestellt, ist die Bodenabzugleitung 14' im Bereich des Schmutzkanals 22 offen, so daß die über die Stabelemente 21 zugeführten Grobstoffe direkt in diese Bodenabzugsleitung 14 ' gelangen.

Der Transport der Grobstoffe im Schmutzkanal wird dabei über seitlich in der Nachbarschaft der Schottenwände 13 in die Entlastungsschwelle 10 eingearbeitete Spülrinnen 23 bewerkstelligt. Über diese Spülrinnen 23 fließt bereits vor Erreichen der Krone der Entlastungsschwelle 10 Überschußwasser in den Schmutzkanal 22, der somit zunächst vorgereinigt wird und - am Ende eines Regenereignisses - auch noch nachgespült wird. (Alternativ oder ergänzend zur Spülrinne kann ein Spülraum oder -kasten angeordnet werden, dessen Inhalt dann jeweils nach dem Entleeren des Beckens entleert wird.)

Dem bisher beschriebenen Ausführungsbeispiel zufolge bilden die Stabelemente 21 ein horizontales (oder beliebig geneigtes) Stabgitter. Die ausgeschiedenen Grobstoffe werden so von den nachgeschobenen Grobstoffen zum Ende der Stabelemente 21 hin geschoben und fallen schließlich in den Schmutzkanal 22. Wie den Darstellungen in Fig. 2 und Fig. 3 zu entnehmen ist, sind die Stabelemente 21 gemäß dem bevorzugten Ausführungsbeispiel jedoch schräg von einer den Schmutzkanal 22 begrenzten Trennwannd 24 zur Entlastungsschwelle 10 geführt, so daß die Grobstoffe über ihre Eigengewichtskraft in den Schmutzkanal 22 rutschen.

Aus der Darstellung nach Fig. 2 und Fig. 3 in Verbindung mit Fig. 1 ist ferner zu erkennen, daß die Stabelemente 21 schmale Rechteckstreifen sind, die - im Querschnitt betrachtet - von der Entlastungsschwelle 10 zur Trennwand 24 hin konisch ausgebildet sind. Damit soll erreicht werden, daß sich etwa im oberen (der Entlastungsschwelle 10 benachbarten) Bereich verzopfendes streifenförmiges Material wieder losgerissen wird, wenn es von nachfolgenden Grobstoffen nach unten gedrängt wird. Die Stabelemente 21 können darüberhinaus an ihrer Oberseite eine Kehlnut aufweisen, so daß sich ein gleichmäßiger Gleitfilm ergibt.

Im Hinblick auf den praktischen Betrieb soll der Vollständigkeit halber noch auf folgendes hingewiesen werden: Wie erwähnt transportiert das über die Spülrinnen 23 in den Schmutzkanal 22 einströmende Überschußwasser die Grobstoffe zur Bodenabzugleitung 14'. Insoweit muß dafür Sorge getragen werden, daß die Aufnahmekapazität dieser Bodenabzugleitung 14 so gedrosselt wird, daß die Grobstoffe vom Schmutzkanal 22 her auch einfließen können. Um dies zu gewährleisten, ist im Bereich der Innenseite der Entlastungsschwelle 10 im Verlauf der Bodenabzugsleitung 14' ein Steuergerät 25 integriert, über das der Ablauf durch die Bodenabzugsleitung 14' vom Bodenabzug 14 her gedrosselt werden kann.

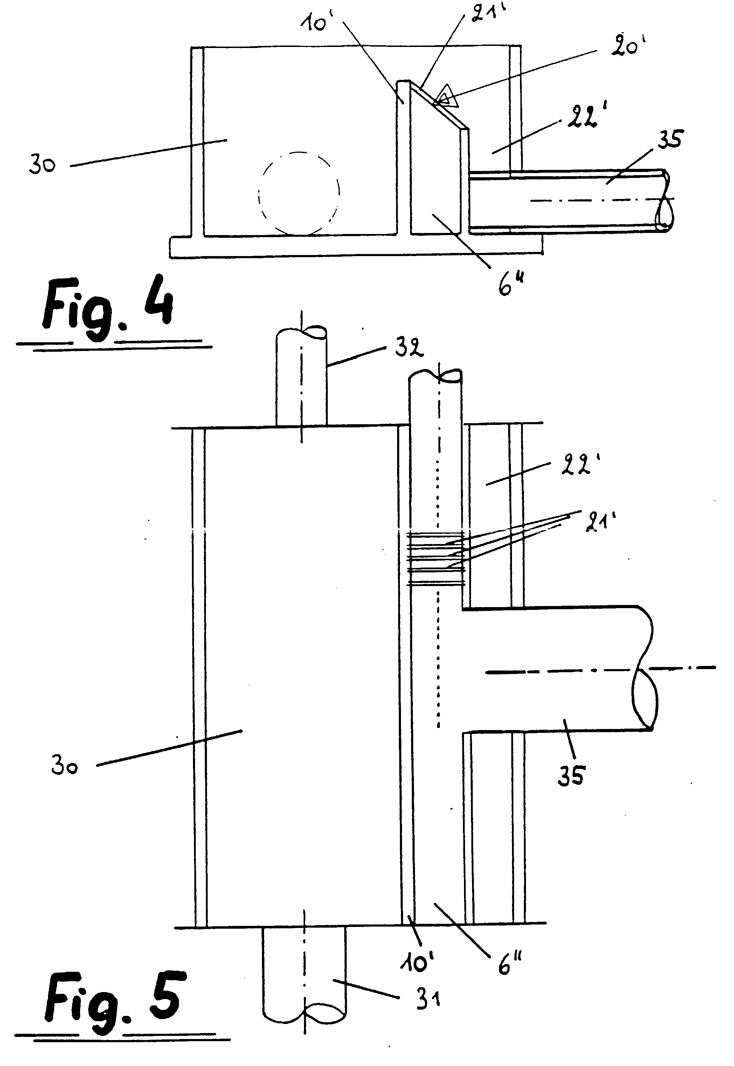

In Fig. 4 und Fig. 5 ist die im Vorstehenden anhand eines sogenannten Regenzyklonbeckens erläuterte Schmutzabscheidung schematisch nochmals in Verbindung mit einem rechteckigen Kanalstauraum 30 beschrieben.

Der Kanalstauraum 30 weist einen Zulauf 31 und einen Ablauf 32 auf; darüberhinaus weist der Kanalstauraum 30 über seine gesamte Länge eine Überlauf- bzw. Entlastungsschwelle 10' auf, an die ein Gerinne 6'' anschließt. Dieses Gerinne 6 '' ist über einen Ablauf 35 mit einem Vorfluter 2 verbunden.

Der vorliegenden Erfindung gemäß ist das vorfluterseitige Gerinne 6 '' durch eine relativ zur Entlastungsschwelle 10' niedrigere Trennwand 24 separiert, wobei der von der Entlastungsschwelle 10 wegliegende Teilbereich als Schmutzkanal 22' dient. Der Schmutzabscheider 20 besteht aus einer Vielzahl von äquidistanten parallelen Stabelementen 21', die zwischen der Krone der Entlastungsschwelle 10' und der Oberkante der Trennwand 24' angeordnet sind. Wird so im Kanalstauraum 30 der kritische Mischwasserabfluß überschritten, so strömt das Überschußwasser über den Schmutzabscheider 20' in das vorfluterseitige Gerinne 6''. Die Grobstoffe bleiben dabei an den Stabelementen 21' hängen und rutschen in den Schmutzkanal 22''. Von hier werden die Grobstoffe dann über eine - nicht dargestellte - Abzugsleitung zum Klärwerk transportiert. Analog zur Spülrinne oder zu einem Spülraum bzw. Spülkasten ist auch hierbei eine Spül- und Nachspülmöglichkeit für den Schmutzkanal 22' vorzusehen.

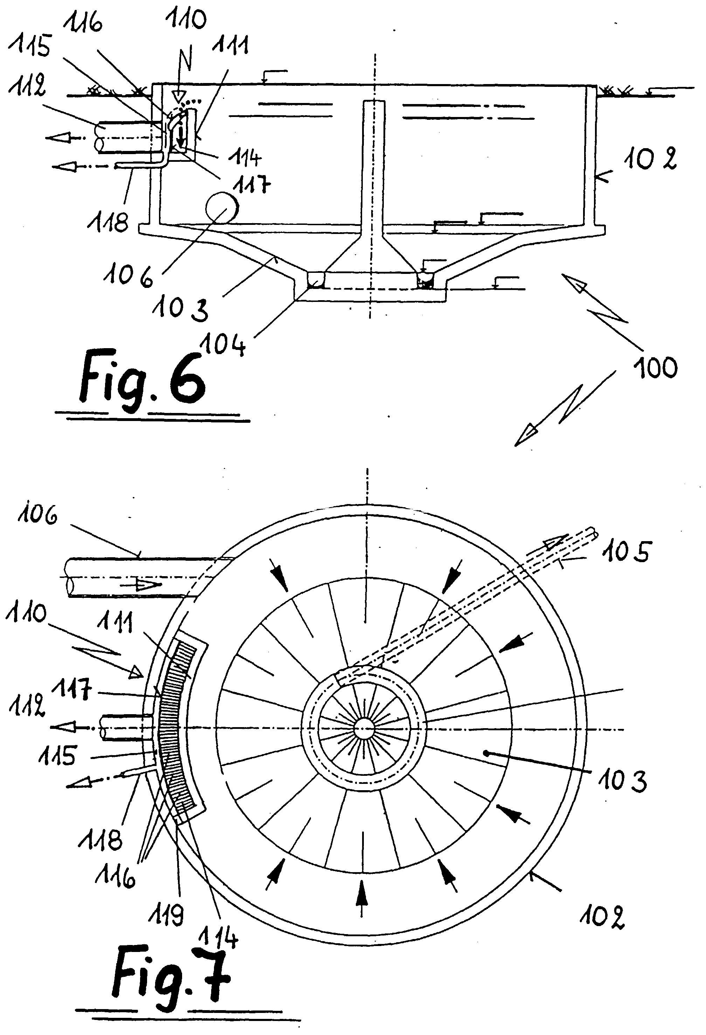

In Fig. 6 und Fig. 7 ist ein Regenbecken mit einem integrierten Sieb dargestellt, daß analog zum bereits beschriebenen Schmutzabscheider ausgebildet ist.

Das Becken 100, das insbesondere auch transportabel ausgebildet sein kann, habe einen kreisförmigen Grundriß. Es soll jedoch explizit darauf hingewiesen werden, daß die vorliegende Erfindung nicht auf runde Regenbecken beschränkt, sondern gleichermaßen auf rechteckige und sonst wie geformte Regenbecken anwendbar ist.

An die lotrechte Begrenzungs- beziehungsweise Seitenwand 102 des Beckens 100 schließt sich ein zur Mittellinie beziehungsweise Symmetrieachse des Beckens 100 nach unten konischer Boden 103 an. Im Beckenmittelpunkt, d.h. an der tiefsten Stelle des Konus, befindet sich ein Schlammablauf 104, an den eine Schlammabzugleitung 105 angeschlossen ist. Oberhalb des konischen (Becken-) Bodens 103 mündet ein Zulauf 106, der das Mischwasser (Regenwasser und Abwasser) in das Beckeninnere leitet. Der Teil des Beckeninnenraums, der sich unterhalb des Zulaufs 106 befindet, ist die sogenannte Schlammzone; der Teil oberhalb des Zulaufs 106 ist die sogenannte Klärzone.

Am Beckenrand ist ein Klarwasserabzug 110 vorgesehen, der dann, wenn der Pegel im Becken 100 einen vorgegebenen, konstruktiv durch einen Überlauf 111 markierten Stand übersteigt, das Überschußwasser aufnimmt und einer Klarwasserleitung 112 zuführt. Über diese Klarwasserleitung 112 kann das Regenbecken bei Überschreiten seiner Aufnahmekapazität in einen Vorfluter entlastet werden (vergleiche gepunktete Linie zum Gerinne in Fig. 6).

Um nun das in den Vorfluter einströmende Überschußwasser zu reinigen und so zu verhindern, daß Schmutz- und Grobstoffe in den Vorfluter gelangen, ist vorgesehen, den genannten Klarwasserabzug 110 in ein funktional mit der Klarwasserleitung 112 verbundenes Gerinne 114 und einen gesonderten Schmutzkanal 115 zu separieren. Das Gerinne 114 ist dabei über einen aus Stabelementen insbesondere Lamellenblechen mit gekrümmter Oberfläche gebildeten Schmutzabscheider 116 abgedeckt. Die Stabelemente sind im Abstand von vorzugsweise 4 mm zueinander angeordnet und bilden so eine Art Abdeckung für das Gerinne 114, durch die zwar das Überschußwasser hindurchfließen kann, die aber die Grobstoffe (sicher) zurückhält.

Das Gerinne 114 und der Schmutzkanal 115 sind durch eine Trennwand 117 gegeneinander separiert, deren Schwelle niedriger liegt als die Krone des Überlaufs 111. Damit ergibt sich ein vom Überlauf 111 schräg nach unten (zum Beckenrand hin und) zur Trennwand 117 liegender Schmutzabscheider 116, so daß die mit dem Überschußwasser in den Klarwasserabzug 110 einschwimmenden Grobstoffe in den Schmutzkanal 115 gleiten können (vergleiche gestrichelte Linie zum Schmutzkanal in Fig. 6). Dieser Schmutzkanal 115 weist ein eigenes Ablaufrohr 118 auf, über die die Grobstoffe dann einer separaten Behandlungsanlage, beispielsweise einem Klärwerk, zugeführt werden (können). Um etwa zu Beginn eines größeren Regenereignisses den Schmutzkanal 115 vor Erreichen des dem Überlauf 111 entsprechenden Pegels "einweichen" und vorreinigen zu können, weist der Schmutzkanal 115 eine relativ zum Überlauf 110 geringfügig tiefer gelegene Spülrinne 119 auf.

## Patentansprüche

1. Anordnung zum Ausscheiden von Grobstoffen und/oder sperrigen Gütern in Regenwasserentlastungsbauwerken, bestehend aus einem im Bereich der Entlastungsschwelle angeordneten Schmutzabscheider, und einem separaten Schmutzkanal, der die vom Schmutzabscheider zurückgehaltenen Grobstoffe aufnimmt,
dadurch gekennzeichnet,
daß die vorzugsweise äquidistant zueinander angeordneten Stabelemente (21) an der Überströmseite der Entlastungsschwelle (10) angeordnet, und an der Kante der Entlastungsschwelle (10) und an der Oberkante einer Trennwand (24) fixiert sind, wobei die Trennwand den Schmutzkanal (22) begrenzt und tiefer liegt als die Entlastungsschwelle (10).

2. Anordnung nach Anspruch 1,
dadurch gekennzeichnet,
daß die Entlastungsschwelle (10) an mindestens einem ihrer Endbereiche eine relativ zur Krone der Entlastungsschwelle (10) tiefer liegende, zum Schmutzkanal (22) hin offene Spülrinne (23) aufweist.

3. Anordnung nach einem der Ansprüche 1 oder 2,
dadurch gekennzeichnet,
daß der Schmutzkanal (22) funktional mit einer Zuleitung zu einer Behandlungsanlage für die Grobstoffe, insbesondere einer Zuleitung zum Klärwerk (5) verbunden ist.

4. Anordnung nach einem der Ansprüche 1 bis 3,
dadurch gekennzeichnet,
daß bei einem kreisförmigen Regenentlastungsbauwerk, bei dem über eine erste Schwelle des Regenentlastungsbauwerks zunächst eine klärwerksseitige Entlastung erfolgt, bei dem die vorfluterseitige Entlastung über die der ersten Schwelle gegenüber höhere Entlastungsschwelle des Regenentlastungsbauwerks erfolgt, und bei dem das klärwerksseitige und das vorfluterseitige Gerinne gegeneinander separiert sind, aer ScnmutzKanai (22) koaxial zum vorfluterseitigen Gerinne (6) liegt, und die Stabelemente (21) von der Entlastungsschwelle (10) ausgehend zum zweiten Ende hin konisch aufgespreizt sind.

5. Anordnung nach einem der Ansprüche 1 bis 4,
dadurch gekennzeichnet, .
daß die Stabelemente (21) als schmale Streifen, insbesondere Rechteckstreifen ausgebildet sind.

6. Anordnung nach Anspruch 5,
dadurch gekennzeichnet,
daß die schmalen Streifen quer zur Überströmrichtung betrachtet derart konisch ausgebildet sind, daß das breitere Ende an der Trennwand (24) anliegt.

7. Anordnung nach Anspruch 5 oder 6,
dadurch gekennzeichnet,
daß die Stabelemente (21) an ihrer Oberseite eine Kehlnut aufweisen.

8. Regenbecken für Abwasseranlagen mit einem Überlauf für geklärtes Wasser,
wobei der Überlauf durch einen am Beckenrand angeordneten Klarwasserabzug mit einem Überlaufwehr und einer Klarwasserleitung gebildet ist,
wobei am Übergang vom Becken zum Klarwasserabzug ein Schmutzabscheider zum Zurückhalten von Schmutzstoffen vorgesehen ist,
und wobei der Klarwasserabzug (110) aus einem mittels des Schmutzabscheiders (116) abgedeckten, funktional mit der Klarwasserleitung (112) verbundenen Gerinne (114) und einem die vom Schmutzabscheider (116) zurückgehaltenen Schmutzstoffe bzw. Grobstoffe abführenden Schmutzkanal (115) zusammengesetzt ist, dadurch gekennzeichent, daß das Gerinne (114) und der Schmutzkanal (115) durch eine relativ zum Überlauf tiefer liegende Trennwand (117) gegeneinander separiert sind, und daß der Schmutzabscheider (116) durch eine Vielzahl äquidistant angeordneter Stabelemente gebildet ist, die an der Oberkante des Überlaufs (111) und an der Oberkante der Trennwand (117) fixiert sind.

9. Regenbecken nach Anspruch 8,
dadurch gekennzeichnet,
daß die Stabelemente durch Lamellenbleche mit gekrümmter Oberkante realisiert sind.

10. Regenbecken nach Anspruch 8 oder 9,
dadurch gekennzeichnet,
daß der Abstand zwischen den Stabelementen etwa 4 mm beträgt.

11. Regenbecken nach einem der Ansprüche 8 bis 10,
dadurch gekennzeichnet,
daß der Schmutzkanal (115) funktional mit einem radial am Becken angeordneten Ablaufrohr (118) für die Grobstoffe verbunden ist.

12. Regenbecken nach einem der Ansprüche 8 bis 11,
dadurch gekennzeichnet,
daß der Schmutzkanal (115) zum Beckeninnenraum hin mindestens eine relativ zum Überlaufwehr (110) geringfügig tiefer gelegene Spülrinne (119) aufweist.

## Claims

1. An arrangement for the separation of coarse matter and/or bulky solids in rainwater relief structures, comprising: an interceptor arranged in the area of a relief weir , and a separate pollutant channel which receives the coarse matter retained by the interceptor
characterized in
that preferably equidistantly spaced bar elements (21) being arranged on an overflow side of said relief weir (10) and are fixed on an edge of said relief weir (10) and on the top edge of a partition (24) whereby the partition (24) separates the pollutant channel (22) and is lower than said relief weir (10) said bar elements.

2. The arrangement according to claim 1
characterized in
that a flushing trough (23) is positioned at at least one end of said relief weir (10) and is situated lower than a crown of said relief weir (10) and is open toward the pollutant channel (22).

3. The arrangement according to claim 1 or 2
characterized in
that the pollutant channel (22) is functionally connected with a feeder leading to a treatment system (5) for coarse matter.

4. The arrangement according to one of the claims 1 to 3
characterized in
that in case said rain relief structure is circular the arrangement comprises:
a sedimentation weir disposed between an inlet and a sedimentation plant channel, said sedimentation weir being lower than saidrelief weir;
said relief weir being disposed between said inlet and an arcuate channel leading to a body of receiving water;
said sedimentation plant channel and said body of receiving water channel being mutually separated;
said pollutant channel (22) is disposed coaxially to the body of receiving water channel (6);
and
said bar elements (21) extending from the relief weir (10) and flaring conically outwardly and downwardly.

5. The arrangement according to one of the claims 1 to 4
characterized in
that said bar elements (21) are fashioned as narrow strips.

6. The arrangement according to claim 5
characterized in
that the narrow strips, viewed transverse to the overflow direction, are fashioned conically in such a way that the wider end abuts a partition (24) disposed radially of said relief weir.

7. The arrangement according to claim 5 or 6
characterized in that
the bar elements (21) have on their top side a fillet.

8. A rain basin for sewage systems with an overflow for clarified water, where the overflow is arranged at a rim of the basin and is formed by a clear water drain with an overflow weir and a clear water line, where at the transition from the basin to the clear water drain there is an interceptor provided for retention of coarse matter, and where said clear water drain (110) comprises:
a channel (114) covered by means of the interceptor (116) which functionally is tied to the clear water line (112) , and a pollutant channel (115) which removes coarse matter retained by the interceptor (116)
characterized in
that the clear water channel (114) and the pollutant channel (115) being mutually separated by a partition (117) which is lower than the overflow and that the interceptor (116) is formed by a plurality of equidistantly arranged bar elements, which are fixed at the top edge of the overflow (111) and at the top edge of the partition (11).

9. The rain basis according to claim 8
characterized in that
the bar elements are tins with a curved top edge.

10. The rain basin according to claim 8 or 9
characterized in that
the spacing between the bar elements amounts to about 4 mm.

11. The rain basin according one of the claims 8 to 10
characterized in that
the pollutant channel (115) is functionally tied to a drain pipe (118) for the coarse matter, said drain pipe (118) is arranged radially on the basin.

12. The rain basin according to one of the claims 8 to 14
characterized in that
the pollutant channel (115) features toward the basin interior at least one flushing trough (119) which is situated sli ghtly lower than said overflow weir (110).

## Revendications

1. Dispositif de ségrégation de matières grossières et/ou de matériaux volumineux dans des installations de déversement d'eaux pluviales, constitué d'un séparateur de débris disposé dans la région du seuil de déversement, et d'un canal séparé de débris, qui reçoit les matières grossières retenues par le séparateur de débris,
caractérisé en ce que les éléments en forme de barreaux (21), disposés de préférence à égale distance les uns des autres, sont disposés sur le côté de débordement du seuil de déversement (10), et sont fixés sur le bord du seuil de déversement (10) et sur le bord supérieur d'une cloison de séparation (24), la cloison de séparation délimitant le canal de débris (22) et se trouvant plus bas que le seuil de déversement (10).

2. Dispositif selon la revendication 1, **caractérisé** en ce que le seuil de déversement (10) présente, dans au moins une de ses régions terminales, une rigole de rinçage (23) située plus bas que la crête du seuil de déversement (10) et ouverte vers le canal de débris (22).

3. Dispositif selon la revendication 1 ou 2, **caractérisé** en ce que le canal de débris (22) est fonctionnellement relié à une conduite d'alimentation menant à une installation de traitement des matières grossières, notamment à une conduite d'alimentation menant à la station d'épuration (5).

4. Dispositif selon l'une des revendications 1 à 3, **caractérisé** en ce que, pour une installation circulaire de déversement d'eaux pluviales dans laquelle on effectue par l'intermédiaire d'un premier seuil de l'installation de déversement d'eaux pluviales d'abord un déversement côté station d'épuration, le déversement côté cours d'eau récepteur s'effectuant par l'intermédiaire d'un seuil de déversement de l'installation de déversement d'eaux pluviales situé plus haut que le premier seuil et la rigole côté station d'épuration étant séparée de la rigole côte cours d'eau récepteur, le canal de débris (22) est coaxial à la rigole côté cours d'eau récepteur (6), et les éléments en forme de barreaux (21) sont écartés coniquement, à partir du seuil de déversement (10), vers la deuxième extrémité.

5. Dispositif selon l'une des revendications 1 à 4, **caractérisé** en ce que les éléments en forme de barreaux (21) sont réalisés sous forme de bandes étroites, notamment de bandes rectangulaires.

6. Dispositif selon la revendication 5, **caractérisé** en ce que les bandes étroites sont, considérées transversalement à la direction de débordement, réalisées avec une conicité telle que l'extrémité plus large s'applique contre la cloison de séparation (24).

7. Dispositif selon la revendication 5 ou 6, **caractérisé** en ce que les éléments en forme de barreaux (21) présentent une rainure sur leur côté supérieur.

8. Bassin d'eaux pluviales pour des installations d'évacuation des eaux usées, avec un trop-plein pour l'eau clarifiée,
le trop-plein étant formé par une évacuation d'eau clarifiée disposée sur le bord du bassin, avec un déversoir de trop-plein et une conduite d'eau clarifiée,
un séparateur de débris étant prévu, pour retenir les débris, à la transition du réservoir à l'évacuation d'eau clarifiée,
et l'évacuation d'eau clarifiée (110) étant composée d'une rigole (114) recouverte au moyen du séparateur de débris (116) et fonctionnellement reliée à la conduite d'eau clarifiée (112), et d'un canal de débris (115) évacuant les débris ou matières grossières retenus par le séparateur de débris (116),
**caractérisé** en ce que la rigole (114) et le canal de débris (115) sont mutuellement séparés par une cloison de séparation (117) située plus bas que le trop-plein,
et en ce que le séparateur de débris (116) est formé par une multiplicité d'éléments en forme de barreaux disposés à éga!e distance entre eux qui sont fixés sur le bord supérieur du trop-plein (111) et sur le bord supérieur de la cloison de séparation (117).

9. Bassin d'eaux pluviales selon la revendication 8, **caractérisé** en ce que les éléments en forme de barreaux sont formés par des tôles en lamelles à bord supérieur courbé.

10. Bassin d'eaux pluviales selon la revendication 8 ou 9, **caractérisé** en ce que la distance entre les éléments en forme de barreaux est égale à environ 4 mm.

11. Bassin d'eaux pluviales selon l'une des revendications 8 à 10, **caractérisé** en ce que le canal de débris (115) est fonctionnellement relié à une conduite d'évacuation (118) pour les matières grossières qui est disposée radialement sur le bassin.

12. Bassin d'eaux pluviales selon l'une des revendications 8 à 11, **caractérisé** en ce que le canal de débris (115) présente, vers l'intérieur du bassin, au moins une rigole de rinçage (119) située légèrement plus bas que le déversoir de trop-plein (110).
